# EUROPEAN PATENT APPLICATION

(11) **EP 3 543 209 A1**
(43) Date of publication of application: **25.09.2019**
(21) Application number: 18163423.9
(22) Date of filing: 22.03.2018
(51) Int. Cl.: C01B 15/023

(54) **PROCESS FOR MANUFACTURING AN AQUEOUS HYDROGEN PEROXIDE SOLUTION**

(71) Applicant: SOLVAY SA, 1120 Brussels (BE)
(72) Inventor: LEMAIRE, Arnaud, 5310 Noville-sur-Méhaigne (BE); DOURNEL, Pierre, 1030 Brussels (BE)
(74) Representative: Vande Gucht, Anne

(57) **Abstract**

Process for producing an aqueous hydrogen peroxide solution which comprises the following steps:
- reducing a solid immobilized quinone (SQ) with hydrogen in an aqueous solution of a water soluble organometallic hydrogenation catalyst in order to obtain the corresponding immobilized hydroquinone (SQH)
- separating said immobilized SQH from the aqueous solution of the water soluble organometallic hydrogenation catalyst
- subjecting said immobilized SQH to oxidation in the presence of oxygen and water in order to generate the aqueous hydrogen peroxide solution and to regenerate the starting immobilized SQ
- separating said immobilized SQ from the aqueous hydrogen peroxide solution.

## Description

The present invention relates to a process for manufacturing an aqueous hydrogen peroxide solution.

Hydrogen peroxide is one of the most important inorganic chemicals to be produced worldwide. Its industrial applications include textile, pulp and paper bleaching, organic synthesis (propylene oxide), the manufacture of inorganic chemicals and detergents, environmental and other applications.

Synthesis of hydrogen peroxide is predominantly achieved by using the Riedl-Pfleiderer process (originally disclosed in U.S. Pat. Nos. 2,158,525 and 2,215,883), also called anthraquinone loop process or AO (auto-oxidation) process.

This well-known cyclic process makes use typically of the auto-oxidation of at least one alkylanthrahydroquinone and/or of at least one tetrahydroalkylanthrahydroquinone, most often 2-alkylanthraquinone, to the corresponding alkylanthraquinone and/or tetrahydroalkylanthraquinone, which results in the production of hydrogen peroxide.

The first step of the AO process is the reduction in an organic solvent (generally a mixture of solvents) of the chosen quinone (alkylanthraquinone or tetrahydroalkylanthraquinone) into the corresponding hydroquinone (alkylanthrahydroquinone or tetrahydroalkylanthraquinone) using hydrogen gas and a catalyst. The mixture of organic solvents, hydroquinone and quinone species (working solution, WS) is then separated from the catalyst and the hydroquinone is oxidized using oxygen, air or oxygen-enriched air thus regenerating the quinone with simultaneous formation of hydrogen peroxide. The organic solvent of choice is typically a mixture of two types of solvents, one being a good solvent of the quinone derivative (generally a non-polar solvent for instance a mixture of aromatic compounds) and the other being a good solvent of the hydroquinone derivative (generally a polar solvent for instance a long chain alcohol or an ester). Hydrogen peroxide is then typically extracted with water and recovered in the form of a crude aqueous hydrogen peroxide solution, and the quinone is returned to the hydrogenator to complete the loop.

There are numerous problems with this known process, the first being the use of a high amount of solvents. Besides, separation of the dissolved AQ from the product solution of hydrogen peroxide is complicated and costly requiring namely liquid-liquid extraction which also involves large volumes of recycle. Additionally, quantitative separation is not achieved so that significant losses of quinone species during the recovery process are inevitable. Moreover, only dilute solutions of hydrogen peroxide are obtained, unless subsequent distillation is undertaken.

Finally, extreme precautions need to be taken in operating the process, particularly since air or oxygen is used as the oxidizing agent to generate the hydrogen peroxide. Blowing air or oxygen into solutions of organic chemicals is a dangerous operation.

In order to solve these problems, US 5785943 discloses a process which uses an anthraquinone (AQ) moiety immobilized on an inert, macromolecular carrier which can be organic or inorganic. This patent teaches that the immobilized AQ may be reduced to immobilized AQH by direct hydrogenation using homogeneous catalysts like ruthenium triphenylphosphine complexes (which are not soluble in water), cobalt pentacyanide (in water), palladium chloride (in DMF). It also teaches that the immobilized AQH so formed can be washed in an inert atmosphere and suspended in water, and that blowing of air brings about AQ and hydrogen peroxide formation.

Examples 20 and 21 of this patent disclose such a process more in detail and respectively use as homogeneous catalyst, cobalt pentacyanide (more precisely pentacyanocobaltate (generated in situ from CoC12 and KCN in water) and palladium chloride in DMF. Both catalytic systems have the inconvenient of being toxic (the first one using Co(II) which is suspected to be CMR (Carcinogenic, Mutagenic or toxic to Reproduction) and cyanide and the second one DMF which is carcinogenic). Besides, the first one is very sensitive to oxidation and the second one is not really a homogeneous catalyst since in fact, Pd black is generated which is in the form of nanoparticles (i.e. a solid). In case of re-use (recycling), the first catalytic system would require no contact at all with oxygen (air) and the second one would imply progressive agglomeration of the active nanoparticles through sintering that would render it less active over time and also difficult to separate from the immobilized AQ.

None of these catalytic systems is hence environmentally friendly and suitable for recycling (re-use) in an industrial process.

The present invention is based on the idea of using as homogeneous hydrogenation catalysts, organometallic compounds that are water soluble so that a complete solvent free industrial AO process can be obtained, functioning in loop and with recycling of both quinone and hydrogenation catalyst as in the current AO process.

The present invention therefore relates to a process for producing an aqueous hydrogen peroxide solution which comprises the following steps:
- reducing a solid immobilized quinone (SQ) with hydrogen in an aqueous solution of a water soluble organometallic hydrogenation catalyst in order to obtain the corresponding immobilized hydroquinone (SQH)
- separating said immobilized SQH from the aqueous solution of the water soluble organometallic hydrogenation catalyst
- subjecting said immobilized SQH to oxidation in the presence of oxygen and water in order to generate the aqueous hydrogen peroxide solution and to regenerate the starting immobilized SQ
- separating said immobilized SQ from the aqueous hydrogen peroxide solution.

Such a process makes it possible to recycle (re-use) both the immobilized SQ and the aqueous solution of the water soluble organometallic hydrogenation catalyst which are both stable in the process steps where they are involved. Besides, the process is completely solvent free (which means less effluents, toxicity, costs, transport and peroxide product contamination issues). Hence, it allows obtaining a greener peroxide (organic free with no TOC) for conventional or stringent (premium) application (food, pharma,...). Finally, it allows reaching high hydrogen peroxide concentrations by recycling the aqueous hydrogen peroxide solution from one batch to the next one in case of a batch process, or by circulating it from one oxidation reactor to next one(s) in case of a continuous process using several pairs of reactors.The aqueous hydrogen peroxide solution that can be obtained with the process of the invention can have a concentration from 0.1 to 25wt%, preferably from 0.5 to 20wt%, more preferably from 1 to 10wt%.

The process of the invention can be processed batch-wise or as a continuous process. It is preferably a semi-continuous process that will be described more in detail later on.

The solid immobilized quinone used in the process of the invention can be obtained by any known means for instance by adsorption (solvent impregnation) of a solid with a quinone, or by grafting a quinone onto a solid. The latter embodiment if preferred because it prevents leaching of the quinone.

The solid that immobilizes (supports) the quinone must be hydrophilic enough to be used in water; it can be organic (polymeric for instance), inorganic (silica, glass, carbon...) or hybrid. Critical parameters are a high density of hydrophilic groups (silanol for instance) content; a high porosity and a pore size allowing quinone diffusion; chemical inert towards the catalyst and the hydrogen peroxide; and mechanical stability.

Good results were achieved with silica, preferably with a silica having a pore size above the size of the quinone molecules and an accessible surface area of at least 200 m²/g (measured by the Brauner - Emmett - Taylor N2 adsorption-desorption method).

In another embodiment, the solid immobilized quinone is a polymer, copolymer or dendrimer of quinone molecules, eventually supported on silica or another solid.

The quinone can be of any type (anthra-, naphto-, benzo-quinone,...), substituted (for instance by alkyl groups) or not. Good results were achieved with anthraquinones.

The solid immobilized quinone can be obtained for instance by the method described in the above mentioned document US 5785943, the content of which in that regard being incorporated by reference in the present application. This method comprises treating the solid with a silane coupling compound carrying a functional group so as to produce a functional group-derivatized solid, and covalently bonding thereto a quinone carrying appropriately selected functional groups for reaction with the functional groups on the solid support. Specific examples of such quinone compounds are anthraquinone carboxylic acid, anthraquinone carboxylic acid chloride [AQCOCl], anthraquinone 2-sulphonyl chloride [AQ-2-SO2 Cl] and anthraquinone 2,6-disulphonyl chloride [AQ-2,6-SOCl2].

In one embodiment, the method includes to activate silica by using silane coupling molecules, e.g., amino propyl trimethoxy silane (APTMS) or amino propyl triethoxysilane (APTES), and to bind AQ thereto, using the AQ derivatives discussed above. Anthraquinone (for example as AQ carboxylic acid chloride) may be covalently bound to the free amino functions which have thus been attached to the silica.

However, the problem with this embodiment is that residual amino functions remain on the grafted silica, which functions capture and deactivate the hydrogenation catalyst.

Hence, in a first preferred embodiment, these residual amino groups are passivated by reaction with acetyl chloride.

In a second preferred embodiment, the silane and the quinone are reacted first and their reaction product (which does not have any free amine functions) is then grafted on the silica.

In a third preferred embodiment, the support is first impregnated and saturated with the quinone and then, treated with the silane. By doing so, small pores are already blocked with the larger quinone molecules, preventing further diffusion of the silane bearing the amine groups into small pores.

The organometallic hydrogenation catalyst used in the invention is a chemical compound that comprises organic ligands bonded to a metal atom. The metal atom typically is a transition metal, preferably of group VII or VIII of the Mendeleev table, more preferably chosen between Ru, Rh, Pd, Os, Ir, Pt and Re. Good results were obtained with Pd.

As to the organic ligands, preferably at least one of them comprises a polar group in order for the catalyst to be water soluble. Possible polar ligands include sulfonate, hydroxyl, ether, carboxylate and amines.

Good results were obtained with sulfonated ligands, especially with sulfonated phosphines. Especially sulfonated triphenylphosphines (TPPS) give good results, more specifically triphenylphosphine tri-sulfonate (TPPTS) because it has a high water solubility (1,1 kg/1). A water soluble hydrogenation catalyst that gave good results is Tris(3,3,3-phosphinidynetris(benzenesulfonato) palladium(0) nonasodium salt nonahydrate.

Another preferred ligand is CYTOP® 208, a tris(3-hydroxypropyl)phosphine commercially available from the company Cytec (now part of the Solvay group).

The reduction step of the process according to the invention is preferably conducted under mild conditions both of temperature and pressure, and under agitation (in the case of a slurry reactor). The reaction temperature generally is from 10 to 60°C, preferably from 25 to 50°C, more preferably from 30 to 40°. The reaction is generally performed under a pressure of from 1 to 10 bara, preferably from 1.2 to 5 bara, more preferably from 1.3 to 3 bara. For a slurry reactor, an agitator rotating at from 200 to 1500 rpm is advantageous. For a fixed bed reactor, any kind of regime can be used, and more preferably the foaming regime.

The step of separating the immobilized SQH from the aqueous solution of the water soluble organometallic hydrogenation catalyst is typically a physical separation step that may imply filtration or the mere draining of the reactor in which the reduction occurred, optionally followed by at least one washing step with DMW and N2.

The oxidation step may take place in a conventional manner as known for the AO-process, preferably under agitation (typically under similar conditions as the reduction reaction). Typical oxidation reactors known for the anthraquinone cyclic process can be used for the oxidation. Bubble reactors which contain the immobilized SQH and water, and through which the oxygen-containing gas (typically air) is passed, are frequently used. The bubble reactors can be free from internal devices or preferably contain internal devices in the form of packing or sieve plates. Oxidation is can be performed at a temperature in the range from 20 to 60° C., particularly at 30 to 40° C. Oxidation is normally performed with air so that preferably over 90%, particularly over 95%, of the immobilized hydroquinone (SQH) form are converted to the quinone form (SQ).

The step of separating the immobilized SQ from the aqueous hydrogen peroxide solution generally happens as for the above separation step of immobilized SQH and catalyst solution.

The water used in the invention preferably is demineralized water (DMW).

The DMW used during the SQH oxidation to generate H2O2 is preferably acidified at a pH ranging from 2 to 4. This DMW preferably contains usual stabilizers (for instance sodium pyrophosphate, sodium stannate, phosphonic- or aminophosphonic acids, dipicolinic acid etc.) to prevent H2O2 decomposition.

In a preferred embodiment, the process of the invention comprises an additional step of re-using/recycling the immobilized SQ and/or the aqueous solution of the water soluble organometallic hydrogenation catalyst.

In another preferred embodiment, compatible with the former ones, the aqueous hydrogen peroxide solution is recycled from one batch to a next one in case of a batch process, or circulated from one oxidation reactor to next one(s) in case of a continuous process.

A preferred embodiment of an industrial process of the invention is a semi-continuous process using fixed beds reactors. For instance, two switching beds can be used in parallel to provide a semi-continuous feed of H2O2. In one bed, the recirculation of the aqueous catalyst solution with hydrogen reduces the SQ to SQH until the full conversion. The fixed bed of SQH is then drained of the liquids, washed with DMW and N2. In the next step, pure DMW is recirculated with air through the bed till the full conversion of SQH to SQ. The solution of H2O2 is drained, the bed is washed with DMW and N2 before to start a new cycle. In the meantime, the other bed is achieving the same process with the appropriate delay.

The homogeneous catalyst is preferably reused along the cycles. To this end, it can be reactivated by spot, semi or continuous addition of fresh ligands to the solution. Constant volume of aqueous catalytic solution is maintained through vacuum distillation (removal of DMW bed washes). The distilled DMW is recycled for the fixed bed washes. The hydrogenation of SQ to SQH is done under reducing atmosphere (H2). The catalyst drainage, it recirculation and storage, the case beinf, are preferably performed under inert atmosphere for instance with/under N2.

To concentrate the hydrogen peroxide solution, the oxidation of SQH to SQ could be done with an already produced hydrogen peroxide solution instead of with fresh DMW. In this embodiment, it is advantageous to provide stabilizers in a right amount (as for instance in the commercial peroxide grades) and to adapt the pH in a range of from 2 to 4 (namely by the addition of mineral acids, preferably nitric acid).

This embodiment can be realized both in batch mode and in a (semi)continuous mode.

In batch mode, the H2O2 solution produced in a first batch is simply recycled to a next batch and so on until the desired concentration is reached.

In a continuous mode, at least two pairs of switching reactors working in parallel could be used as explained above. The H2O2 solution generated in reactor 2 from the first pair of reactors (which is fed with DMW) is fed to reactor 2 of the second pair of reactors (instead of DMW) and so on with the number of pairs of reactors required to reach the desired H2O2 concentration.

### Examples

### Example 1 - single experiment

The following example describes more in detail some specific, preferred embodiments of the invention.
A. First, a solid grafted quinone has been synthesized by:
   - Dehydratation of a commercial silica carrier (type Q15 from Fuji Silysia) under vacuum at 180°C for 8 hours.
   - Grafting of amino propyl triethoxysilane (APTES, excess) onto the Q15 silica carrier silanols.
   - Washing of the NH2-Q15 material from the residual non reacted APTES and drying under vacuum at 75°C.
   - Peptization of anthraquinone-2-carbonyl chloride (AQ-Cl, 10% excess based on NH2 quantification by TG-DSC) with the amino functionalized silica carrier (NH2-Q15) in presence of pyridine (Py) as an HCl trap.
   - Extensive washing of the AQ-Q15 material from unreacted materials and the HCl.Py salt.
   - Drying of the material in vacuum at 75°C.
   - Passivation of the remaining AQ-Q15 NH2 moieties with small reactive acetyl chloride (excess) and pyridine (excess).
   - Drying of the NH2 free P-AQ-Q15 under vacuum at 75°C.
B. Second, this solid grafted quinone (P-AQ-Q15) has been used in a hydrogenation reaction with the following sequence:
   - 10g of dried P-AQ-Q15 (10% of grafted AQ) has been soaked into 300 ml of demineralized water (DMW)
   - This slurry has been loaded into a glass double jacked reactor
   - The mixture was heated to 50°C
   - 0.06g of soluble Tris(3,3,3-phosphinidynetris(benzenesulfonato) palladium(0) nonasodium salt nonahydrate was dissolved in this aqueous mixture.
   - Hydrogenation was initiated after several N2 purge with H2 at 1.2 barg for 1 hour at 50°C and 1500 rpm. The greenish P-AQ-Q15 was turning to dark green material along the quinone reduction process (P-AQH-Q15).
   - The reactor content was then drained and aqueous catalyst phase was separated from the solid material P-AQH-Q15.
C. Third, the so-obtained P-AQH-Q15 has been used in oxidation-extraction reaction with the following sequence:
   - 10g of P-AQH-Q15 solid has been soaked into 400 ml of DMW.
   - This slurry has been loaded into a glass double jacked reactor
   - The mixture was heated to 50°C
   - Oxidation was carried out at 1500 rpm under air at 1.2 barg for 20 minutes. The dark green P-AQH-Q15 material was turning back to greenish solid along the quinone oxidation process (P-AQ-Q15).
   - The reactor content was then drained and the peroxide aqueous phase was separated from the P-AQ-Q15 compound.

The presence of H2O2 was assessed by UV-light spectroscopy with TiC14 complexation. The grafted quinone solid material (SQ) can be further used in additional hydrogenation/oxidation/extraction cycles and so can the aqueous catalyst phase.

### Example 2: several experiments in series

11 complete hydrogenation, oxidation and extraction cycles have been achieved with the as synthetized P-AQ-Q15 compound.

The hydrogenation phase was the following: a given amount of P-AQ-Q15 material was slurried into 200ml of DMW at 45°C under N2. In the mixture, 30 mg of TPPTS catalyst was dissolved. After the N2 purge, the reaction occurred under H2 atmosphere (200 mbarg) at 1500 rpm. Along reaction process, the pale greenish P-AQ-Q15 solid is reduced to dark green P-AQH-Q15 material. It took approximately 20 minutes to complete the reaction. The catalytic solution was drained, the P-AQH-Q15 material was washed with DMW, optionally dried at 70°C, and oxidized. The H2 volume uptake has been measured during the reaction and normalized towards the amount of quinone (Q) grafted on the support (Hydrogenation Rate in %, TH%).

The oxidation phase was the following: the corresponding amount of material P-AQH-Q15 was poured into 100ml of DMW. The mixture was agitated at 1500 rpm in an open vessel at 30°C. Within 5 minutes, the P-AQH-Q15 material turned back to the initial greenish P-AQ-Q15 coloration with the release of H2O2. The aqueous hydrogen peroxide solution was collected, the P-AQ-Q15 washed with DMW and re-used for a new hydrogenation/oxidation cycle.

11 cycles were achieved at 100% hydrogenation without noticing any P-AQ-Q15 degradation in yield. No further tests were conducted. The same TPPTS was recycled from cycles 6 to 9 without any efficiency modifications. This was not continued since the volume of aqueous catalytic solution was too important for the reactor due to wash dilutions. Hence, the other trials were conducted with fresh TPPTS.

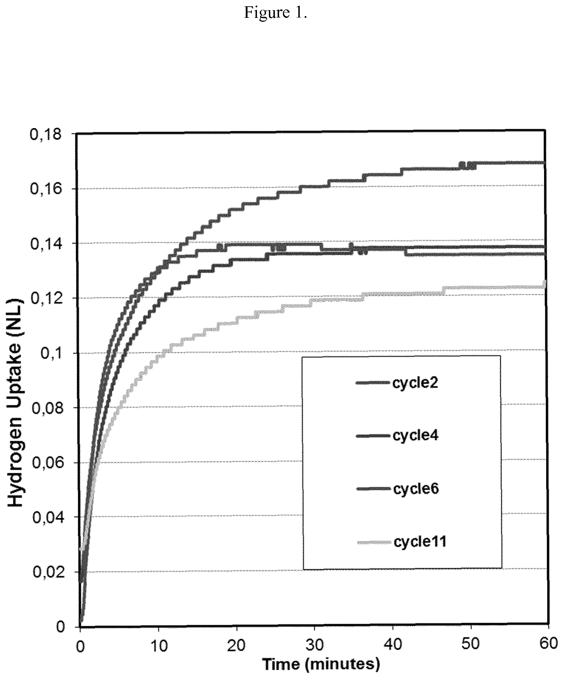

Fig 1 attached shows the hydrogen uptake recorded for reactions 2, 4, 6 and 11. Diminution in H2 uptake corresponds to physical material segregations over cycles (losses from drains &transfers, and savings for characterizations and other experiments).

Table 1 below summarizes the results obtained.

**Table 1**

| **Cycle** | **TH₂ (%)** | **Q (g)** | **H₂O₂ (mg)** |
|---|---|---|---|
| 2 | 95 | 0,9 | |
| 4 | | | |
| 6 | | | |
| 11 | 100 | 0,6 | 15 (70) |

The theoretical amount of H2O2 that should be produced with said catalyst after 11 cycles is 70 mg. However, considering the fact that said solution was not stabilized and that the measurement takes some time, an effective amount of 15 mg was measured using UV spectroscopy.

## Claims

1. A process for producing an aqueous hydrogen peroxide solution which comprises the following steps:
- reducing a solid immobilized quinone (SQ) with hydrogen in an aqueous solution of a water soluble organometallic hydrogenation catalyst in order to obtain the corresponding immobilized hydroquinone (SQH)
- separating said immobilized SQH from the aqueous solution of the water soluble organometallic hydrogenation catalyst
- subjecting said immobilized SQH to oxidation in the presence of oxygen and water in order to generate the aqueous hydrogen peroxide solution and to regenerate the starting immobilized SQ
- separating said immobilized SQ from the aqueous hydrogen peroxide solution.

2. The process according to claim 1, wherein the quinone is grafted onto the solid.

3. The process according to claim 1 or 2, wherein the solid is silica.

4. The process according to any of claims 1 to 3, wherein the quinone is an anthraquinone.

5. The process according to any of claims 1 to 4, wherein the water soluble organometallic hydrogenation catalyst comprises organic ligands bonded to a transition metal.

6. The process according to claim 5, wherein the transition metal is of group VII or VIII of the Mendeleev table.

7. The process according to claim 6, wherein the transition metal is chosen between Ru, Rh, Pd, Os, Ir, Pt and Re.

8. The process according to claim 7, wherein the transition metal is Pd.

9. The process according to any of claims 5 to 8, wherein at least one of the organic ligands comprises a polar group.

10. The process according to claim 9, wherein the polar group is selected from sulfonate, hydroxyl, ether, carboxylate and amines.

11. The process according to claim 10, wherein the water soluble organometallic hydrogenation catalyst comprises at least one sulfonated ligand, preferably a sulfonated phosphine.

12. The process according to claim 11, wherein the water soluble organometallic hydrogenation catalyst is a sulfonated triphenylphosphine (TPPS), preferably a triphenylphosphine tri-sulfonate (TPPTS).

13. The process according to claim 12, wherein the organometallic hydrogenation catalyst is Tris(3,3,3-phosphinidynetris(benzenesulfonato) palladium(0) nonasodium salt nonahydrate.

14. The process according to any of claims 1 to 13, which comprises an additional step of re-using/recycling the immobilized SQ and/or the aqueous solution of the water soluble organometallic hydrogenation catalyst.

15. The process according to any of the preceding claims, wherein the aqueous hydrogen peroxide solution is recycled from one batch to a next one in case of a batch process, or circulated from one oxidation reactor to next one(s) in case of a continuous process.
